# EUROPEAN PATENT APPLICATION

(11) **EP 4 273 517 A1**
(43) Date of publication of application: **08.11.2023**
(21) Application number: 22382434.3
(22) Date of filing: 06.05.2022
(51) Int. Cl.: G01F 23/292, G01F 23/80, G06N 3/02, G06N 20/00

(54) **METHOD AND SYSTEM FOR MEASURING THE QUANTITY OF A BULK PRODUCT STORED IN A SILO**

(71) Applicant: Insylo Technologies, S.L., 17003 Girona (ES)
(72) Inventor: Vila Clarà, Oriol, 08506 Calldetenes (Barcelona) (ES); Raba Sanchez, David, 17180 El Perello de Vilablareix (Girona) (ES); Gelada Sáez, Carles, 17160 Angles (Girona) (ES); Gelada Camps, Jaume, 17160 Angles (Girona) (ES); Boada, Imma, 17003 Girona (ES)
(74) Representative: Isern Patentes y Marcas S.L.

(57) **Abstract**

The present invention relates to a method and a system for determining a parameter proportional to the quantity of a product stored in a silo by means of a machine learning model; the system comprises image acquisition means configured to take images of at least part of the surface of the stored product and a computer with a machine learning model, configured to obtain the parameter

## Description

### OBJECT OF THE INVENTION

The present invention relates to a method and a system for determining a parameter proportional to the quantity of a product stored in a silo by means of a machine learning model; the system comprises image acquisition means configured to take images of at least part of the surface of the stored product and a computer with a machine learning model, configured to obtain the parameter.

### BACKGROUND OF THE INVENTION

A silo or bin is a structure used to store bulk materials in many industries. These structures are commonly used for storing loose dry materials such as grain and other food products, minerals, cement, wood chips or sawdust. Silos generally have a cylindrical shape, sometimes with a cone at the bottom, and are usually made of concrete, bricks, metal, fibreglass, plastic or even wood.

Monitoring the level or quantity of product stored in a silo at a given moment is essential for an efficient management of the stock. For that purpose, in traditional systems the product is manually weighted before entering the silo, or in some cases, the level reached by the product is measured by knocking on the external walls of the silo at different levels. The inherent simplicity of these methods is hampered by its inaccurate results and time inefficiency, among others. To overcome these limitations, these outdated methods are nowadays being substituted by automatic measuring systems.

Different solutions that have been proposed to measure the silo level; overall, the technologies may be grouped in plumb-bob, weight and cable, ultrasonic, guided wave radar (GWR), laser meters, load cells and thru-air radar (TAR) techniques. The performance of these techniques is very sensitive to ambient parameters such as humidity, temperature, material type, or airborne dust, among others factors, which may introduce errors on the measurements.

Particularly, ultrasonic and laser methods are not suitable for dusty mediums, and load cells are not appropriate for larger silos. However, GWR and TAR are able to overcome these limitations, and for this reason, they have become very popular in recent years. The operating principle of GWR and TAR devices is the emission of a beam or a wave on the product that, once reflected on the product surface, is detected again by the device to perform the level computations. Moreover, GWR are generally more accurate and have a high signal-to-noise ratio because of the non-dispersible nature of the beam. However, they can only detect the level on a single point of the surface of the product, which might not be enough to measure or determine the content level.

There are also known 3D scanners capable of measuring the level of the content of a silo by emitting low-frequency acoustic waves to multiple points of the surface, and processing the reflected waves.

Despite the accuracy being substantially improved with such methods, the cost of these systems is also significant, and therefore there is a need for an accurate and cost-efficient system and method for measuring the quantity of material stored in a silo.

### DESCRIPTION OF THE INVENTION

In a first inventive aspect, the invention provides a *method for measuring the quantity* of a *bulk product stored in a silo by means* of a *measuring system, the measuring system comprising:*
*image acquisition means arranged inside the silo, and configured to take images of at least part of the surface of the stored product,*
*a computer, operatively connected to the image acquisition means, wherein the computer comprises a machine learning model configured to determine a parameter proportional to the quantity of stored product;*
*wherein the method comprises, by the computer, the steps of:*
*receiving a set of input data comprising images taken by the image acquisition means, feeding the input data set to the machine learning model,*
*obtaining an output from the machine learning model, wherein the output corresponds a parameter proportional to the quantity of the stored product.*

Advantageously, the method makes possible measuring the quantify of a bulk product stored in a silo with a high accuracy by obtaining a parameter proportional to the amount of product stored in the silo with a machine learning model; the parameter is, in a preferred embodiment, the ratio of the stored product volume to the storing volume of the silo, or occupancy index. For that purpose, a computer receives input data comprising images of the surface of the stored product obtained with image acquisition means, feeds the input data to a machine learning model, and finally the model determines the parameter proportional to the quantity of product.

Throughout the present embodiment, parameter proportional to the quantity of product, or simply, parameter, should be understood as any physical magnitude proportional to the amount of a product stored in the silo or container, obtained as a result of feeding input data to the machine learning model; examples of physical magnitudes proportional to the quantity of product are the volume and the mass of stored product; by proportional should be understood any mathematical or logical relationship between the parameter and the quantity of product which might provide information about the amount of product stored in the silo; examples of such mathematical relationship are product, inverse, exponential and logarithmic relationships. In some embodiments, the parameter corresponds to the relative volume of product in respect of the volume of the silo (or ratio of stored product volume to net storing volume), the relative volume available for storage in respect of the volume of the silo, the volume of stored product or the mass of stored product. These parameters may be obtained by computation of a physical magnitude (e.g., obtaining the mass with the density and volume of the product), but preferably, the parameters are obtained directly as an output of the machine learning model.

Silo should be understood as a site, container, vessel or bin of any type, suitable for storing a bulk material or product; in a preferred embodiment, the silo is a large container for storing dry, solid loose materials, such as, for example, grain and other food products, minerals, cement, wood chips or sawdust; in an example, the silo is a waste bin, for example a refuse container for plastic, glass or paper; in another example, the silo is a trench silo. Preferably, the silo comprises a wall defining an inner space for storing the product, and upper and lower portions, wherein the stored product accumulates inside the silo, on its lower portion, due to gravity.

Image acquisition means should be understood as any device capable of producing a spatially organized set of data, such as pixels, as a result of an exposure of a sensing part to a radiation, such as light or infrared radiation. Examples of image acquisition means are digital cameras, infrared cameras and the like. In an embodiment, the image acquisition means comprise one, two or more cameras, pointing to the same or different portions of the surface of the product, in another embodiment, the image acquisition means comprise other sensors. It should be also understood that the image acquisition means are positioned inside of the silo, with an orientation, or angular position, which makes it possible the acquisition of images of at least part of the upper surface of the product stored in the container. In a preferred embodiment, the image acquisition means are positioned on the inner side of a silo wall, substantially on the upper portion of the silo; also preferably, the image acquisition means are arranged with the sensing part aiming downwards and inwards of the silo; in other examples, such as open silos, where the product is laid directly on the ground, the image acquisition means may be arranged on any suitable structural element, such as masts or towers.

Computer should be understood as any suitable computing system capable of executing the described method; in an example, the computer is a conventional personal or industrial computer connected by means of a wired connection to a camera arranged inside of the silo; in another example, the computer and the image acquisition means are integrated in a single device, such as a purpose-built camera system; in yet another example, the computer is a distributed computing system, comprising one or more client devices in data communication with one or more server devices.

By machine learning model, or model, should be understood a set of computer instructions obtained as an implementation of a machine learning algorithm trained with a set of labelled data; the model receives as input a set of input data, and obtains or outputs the parameter proportional to the quantity of product. The set of input data comprises at least one image of the upper surface of the stored product acquired by the image acquisition means; in an embodiment, the set of input data further comprises characteristics of the silo and/or the product.

Advantageously, the method makes possible the monitoring of the amount of stored product, but it also allows for the prediction of issues such as leakages of water, presence of rodents and other pests, and diseases or infections, especially in food products.

In a particular embodiment, *the machine learning model is obtained by executing a machine learning algorithm with a first training data set, wherein the first training data set comprises labelled images* of *at least part of the surface of the stored product.*

The machine learning algorithm may be fully trained with a training data set comprising images showing part or the whole upper surface of the stored product, possibly showing a portion of the boundary of the product surface in contact with the silo wall. As known in the art, the training comprises iteratively executing the machine learning algorithm with the images of the training data set as input data, with each image of the training data set associated to a target parameter, or labelled; the resulting machine learning model is capable of determining a parameter proportional to the quantity of the stored product after receiving an image similar to the training data images.

In a particular embodiment, *the machine learning model is obtained by transfer learning* of a *previous machine learning model, re-trained with a second training data set, wherein the second training data set comprises labelled images of at least part of the surface of the stored product.*

Obtaining a model by means of a full training process may require substantial time and resources. Alternatively, the model may be obtained by transfer learning of a previous, more generic machine learning model; this model may be, for example, a generic image recognition model, which is repurposed for a specific task, in this case, determining a parameter proportional to the quantity of stored product. In the case of an artificial neural network, the transfer learning can be implemented by substituting one or more of the end layers of the previous model with task specific layers; the new, purpose specific layers are trained with a specific training data set, the second training dataset; thus, the previous model is re-trained. The second training data set might comprise the same training data as the first training data set, or might contain data specific to a certain type of silos, or a certain type of product, or both.

For example, in an embodiment, the previous model is a generic image recognition machine learning model, which is re-trained in part with a second training data set comprising images showing part or the whole upper surface of the stored product of a generic silo. This has the advantage that reduces the time and computation costs of training from scratch a whole machine learning algorithm. In another embodiment, the previous model has been trained with the first training data set, comprising images of several products stored in different types of silos, and it is then re-trained in part with a second training data set comprising images of a specific type of silo and a specific type of product. This makes possible to attain a higher accuracy in the quantity of stored product and reduce the costs of fully training a machine learning algorithm for several types of silos.

In a particular embodiment, *the machine learning algorithm is a neural network, preferably a convolutional neural network, CNN.*

The method may make use of one or more machine learning algorithms, according to the requirements of each application; in a preferred case, the machine learning algorithm is a transformer algorithm; in other embodiments, the machine learning algorithm is a convolutional neural network, or is recurrent neural network, RNN.

In a particular embodiment, *the images are RGB images, infrared images, monochrome images, or a combination of them.*

RGB images are digital images with three channels (Red, Green and Blue), which are commonly used to encode digital colour images; infrared images show additional information in respect of what is perceived in the optical range; and monochrome images allow for a higher contrast and definition. A combination of these image formats can be achieved by using artificial colouring (e.g., adding infrared features over a RGB image with a non-realistic colour) or superimposing layers.

In a particular embodiment, *the images are a temporal sequence of images.*

A sequence of images may show the temporal or time evolution of the quantity of stored product, but it can also lead to a more accurate value of the parameter by concurrently considering a plurality of slightly different images. In a case, the temporal sequence of images constitutes a sequence of frames of a video, which can advantageously allow for a more accurate detection of the quantity of product.

In a particular embodiment, *the first training data set, the second training dataset, or both, comprise software generated images.*

In those cases where is not possible or profitable to obtain enough images for a training dataset, a software may synthesise training images according to a known behaviour of the type of product and the characteristics of the silo.

In a particular embodiment, *the input data set, the first training data set, the second training dataset, or a combination of them, comprise one or more of: characteristics of the silo, characteristics of the stored product, position of the image acquisition means, orientation of the image acquisition means, light field in one or more points of the silo, atmospheric conditions of the silo.*

Either the first or second training data sets, or the input data may comprise additional data to the images of the silo. Examples of this additional data are characteristics of the silo such as shape, dimensions, and material; characteristics of the stored product, such as density, average humidity, colour and reflectivity; position and orientation of the image acquisition means in respect of the boundaries of the silo; light field inside the silo, comprising the illumination conditions, and considering, for example, the presence of airborne dust; and the atmospheric conditions inside the silo, which may comprise the local temperature and humidity conditions.

In a second inventive aspect, the invention provides a *measuring system for measuring the quantity* of a *bulk product stored in a silo, wherein the measuring system comprises:*
*image acquisition means, arranged inside the silo,*
*a computer, operatively connected to the image acquisition means, wherein the computer comprises a machine learning model, and wherein the computer is configured to execute the method of the first inventive aspect.*

The measuring system advantageously provides a simple and versatile apparatus capable of acquiring images of the stored product and determining a parameter proportional to the quantity of stored product; the measuring system may be implemented with known in the art elements, by refurbishment of existing devices, or purpose-built with dedicated devices.

In a particular embodiment, *the image acquisition means is a RGB camera or an IR camera or a monochrome camera, or a combination of them.*

In a particular embodiment, *the computer is a distributed computer system, comprising a plurality of processing devices interconnected by a network, or the computer is integrated with the image acquisition means.*

### DESCRIPTION OF THE DRAWINGS

The foregoing and other advantages and features will be more fully understood from the following detailed description of exemplary embodiments with reference to the accompanying drawings, which should be considered by way of illustration and not limitation, in which:
- Figure 1: This figure shows an embodiment of the measuring system and the silo.
- Figure 2: This figure represents a flowchart of an embodiment of the method.
- Figures 3a, 3b, 3c: These figures show three embodiments of the measuring system.

### PREFERRED EMBODIMENT OF THE INVENTION

Throughout the present document it will be understood that various parts of one embodiment of the invention can be freely combined with parts described in other embodiments, even being said combination not explicitly described, provided there is no harm in such combination.

A preferred implementation example of the present invention proposes a method and a system for measuring the level of wheat stored in a cylindrical silo by using RGB sensors and a conventional computer. This is a low-cost alternative, easy to use and with little adaptation to an existing silo, which can determine the filling level of the silo by feeding RGB images of the upper surface of the product to a convolutional neural network, CNN, with several layers, which is capable of obtaining a parameter relative to the quantity of product stored in the silo, in particular the ratio of wheat volume in respect of the net storing volume of the silo.

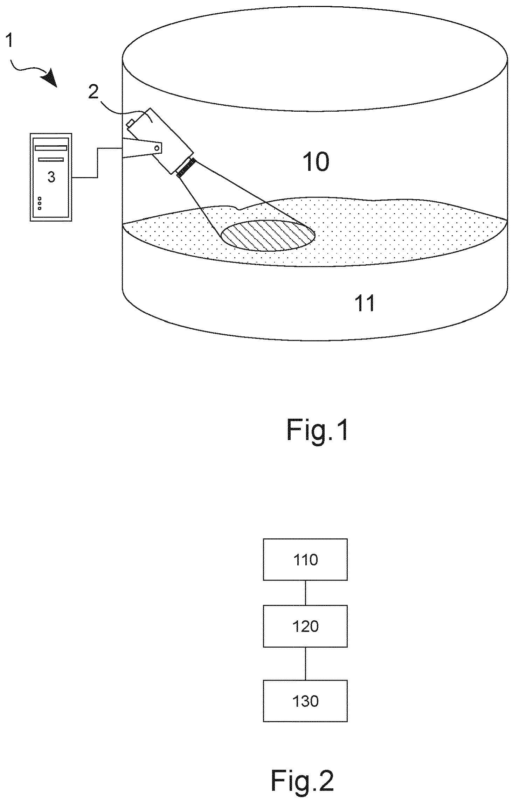

Figure 1 depicts this example of the system (1) for measuring the quantity of wheat and the silo (10) in which the product (11) is stored. In the example, the silo (10) is a conventional cylindrical grain bin, with a wall and upper and lower portions; as shown on Fig. 1, the product (11) lies on the lower part of the silo (10), and the level rises as more product (11) is added to the silo (10); with the change of the level, the surface of the product (11) experiences optical and topological changes which can be recorded on an image. The measuring system (1) comprises image acquisition means (2), which in this example is a RGB digital camera configured to take images showing the upper surface of the product (11); the image acquisition means (2) are arranged inside the silo (10), on its upper portion, attached to the wall and oriented towards the upper surface of the product (11); the image acquisition means (2) are further connected to the computer (3), which in the example are positioned outside of the silo (10), with a conventional wired connection. The computer (3) receives at least one image from the image acquisition means (2), transforms it into a set of input data, for example, formatting the digital image, and outputs the ratio of wheat volume in respect of the net storing volume.

The flowchart of Fig. 2 shows the steps of the method executed by the computer (3); in the first step, the computer (3) receives (110) a set of input data comprising at least one image taken by the image acquisition means (2); in this example, the format of the input data is also adapted to a given format accepted as input of the machine learning model. Then, in the next step, the computer feeds (120) the input data set to the machine learning model, and as a result obtains (130) the output parameter, namely the ratio of wheat volume in respect of the net storing volume of the silo (10).

The machine learning model of the example is obtained by training a generic CNN for image recognition using an image database comprising non-specific images from a number of fields. This process is computationally intensive since a large amount of labelled visual data has to be passed through the CNN layers to ensure high levels of accuracy in regression and classification tasks; for this reason, transfer learning is used in the described example. Typically, in a transfer learning process, the early layers of a CNN learn low-level image features, which are applicable to most computer vision tasks, and therefore they are not modified, while the subsequent application-specific layers are re-trained with a second training data set. Accordingly, transfer learning uses a pre-trained CNN as a previous model, and re-trains a subset of its parameters using a task-specific set of training data to adapt it to the new task of determining the parameter. In other examples, the machine learning model is obtained by fully training a CNN with a first training dataset.

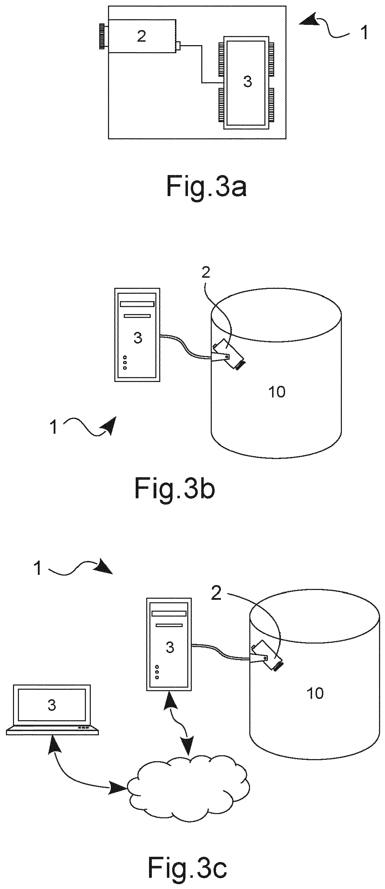

The measuring system (1) may be configured in a different manner as described in the previous example; further examples of configuration are shown in the embodiments of Figs. 3a-3c. In the embodiment of Fig. 3a, the image acquisition means (2) and the computer (3) are integrated in a single apparatus, which may be installed within the silo (10); in this example the sensing part of the image acquisition means (2) is partly outside of a casing housing as well a computer (3), depicted as a printed circuit board. In another embodiment, shown on Fig. 3b, the image acquisition means (2) are arranged inside the silo (10) and connected with a wire to the computer (3) located on a more accessible spot outside the silo (10), such as a control room. In a third embodiment depicted on Fig. 3c, the computer (3) is a distributed computer system, comprising a plurality of processing devices interconnected by a network, such as internet; this embodiment of the computer allows for a fully remote operation of the measuring system (1) from any location with access to the network.

## Claims

1. Method for measuring the quantity of a bulk product stored in a silo (10) by means of a measuring system (1), the measuring system (1) comprising:
image acquisition means (2) arranged inside the silo, and configured to take images of at least part of the surface of the stored product (11),
a computer (3), operatively connected to the image acquisition means (2), wherein the computer (3) comprises a machine learning model configured to determine a parameter proportional to the quantity of stored product (11);
wherein the method comprises, by the computer (3), the steps of:
receiving (110) a set of input data comprising at least one image taken by the image acquisition means (2),
feeding (120) the input data set to the machine learning model,
obtaining (130) an output from the machine learning model, wherein the output corresponds to a parameter proportional to the quantity of the stored product (11).

2. Method according to the previous claim, wherein the machine learning model is obtained by executing a machine learning algorithm with a first training data set, wherein the first training data set comprises labelled images of at least part of the surface of the stored product (11).

3. Method according to claim 1, wherein the machine learning model is obtained by transfer learning of a previous machine learning model, re-trained with a second training data set, wherein the second training data set comprises labelled images of at least part of the surface of the stored product (11).

4. Method according to any of previous claims 2-3, wherein the machine learning algorithm is a neural network, preferably a convolutional neural network, CNN.

5. Method according to any of previous claims, wherein the images are RGB images, infrared images, monochrome images, or a combination of them.

6. Method according to any of previous claims, wherein the images are a temporal sequence of images.

7. Method according to any of previous claims 2-6, wherein the first training data set, the second training dataset, or both, comprise software generated images.

8. Method according to any of previous claims, wherein the input data set, the first training data set, the second training dataset, or a combination of them, comprise one or more of: characteristics of the silo, characteristics of the stored product, position of the image acquisition means, orientation of the image acquisition means, light field in one or more points of the silo, atmospheric conditions of the silo.

9. Measuring system (1) for measuring the quantity of a bulk product stored in a silo (10), wherein the measuring system (1) comprises:
image acquisition means (2), arranged inside the silo (10),
a computer (3), operatively connected to the image acquisition means (2), wherein the computer (3) comprises a machine learning model, and wherein the computer (3) is configured to execute the method of any of previous claims.

10. System (1) according to previous claim, wherein the image acquisition means (2) is a RGB camera or an IR camera or a monochrome camera, or a combination of them.

11. System (1) according to previous claim, wherein the computer (3) is a distributed computer system, comprising a plurality of processing devices interconnected by a network, or the computer (3) is integrated with the image acquisition means (2).
